# EUROPEAN PATENT APPLICATION

(11) **EP 0 625 725 A1**
(43) Date of publication of application: **23.11.1994**
(21) Application number: 94107331.4
(22) Date of filing: 11.05.1994
(51) Int. Cl.: G03B 17/30

(54) **Film cassette with film exposure-status indicator device**

(30) Priority: 20.05.1993 US 66686
(71) Applicant: EASTMAN KODAK COMPANY, Rochester, New York 14650-2201 (US)
(72) Inventor: Zander, Dennis Roland, c/o EASTMAN KODAK COMPANY, Rochester, New York 14650-2201 (US)
(74) Representative: Blickle, K. Werner, Dipl.-Ing.

(57) **Abstract**

A film cassette (1) comprises a cassette shell adapted to house a filmstrip, and film exposure-status indicating means (35,37,39,41) for providing respective indications that a filmstrip housed in the cassette shell is unexposed or exposed. According to the invention, the film exposure-status indicating means includes a plurality of icon cut-outs (35,37,39,41) in the shell uniquely shaped to be different from each other for one of the cut-outs to denote the filmstrip is unexposed and another of the cut-outs to denote the filmstrip is exposed, and an indicator flag (43) rotatably supported to be successively visible through the cut-outs to highlight the cut-outs to provide respective indications that the filmstrip is unexposed or exposed.

## Description

### CROSS-REFERENCE TO RELATED APPLICATIONS

Reference is made to commonly assigned, copending applications Serial No. 066,285 entitled FILM CASSETTES WITH COMBINED FILM EXPOSURE-STATUS AND FILM SPEED INDICATOR DEVICE in the name of Jeffrey R. Stoneham, and Serial No. DE 008,735 entitled FILM CASSETTE WITH EXPOSURE STATUS INDICATORS and filed May 20, 1993 in the name of Dennis R. Zander.

### BACKGROUND OF THE INVENTION

### Field of the Invention

The invention relates generally to the field of photography, and in particular to film cassettes. More specifically, the invention relates to a film cassette with a film exposure-status indicator device for providing respective indications that a filmstrip housed in the cassette shell is unexposed or exposed.

### Description of the Prior Art

Commonly assigned U.S. Pat. No. 5,122,820, issued June 16, 1992, discloses a film cassette comprising a cassette shell adapted to house a filmstrip, and film exposure-status indicating means for providing respective indications that a filmstrip housed in the cassette shell is unexposed or partly exposed or fully exposed. The film exposure-status indicating means includes a colored indicator rib which is rotatable with a film spool inside the cassette shell to successively move into three identical windows. The respective indicator windows are formed in an end cap of the cassette shell opposite three visible indicia "UNEXPOSED", "PARTIAL", and "EXPOSED" printed on labels adhered to the cassette shell. The film spool has three spaced detents arranged at separate radial locations for engagement to lock the spool in corresponding rotational orientations to hold the indicator rib in any one of the three windows. The cassette shell has a radial slot in which a locking member is movable between a locking position for individually engaging anyone of the three detents and a non-locking position for disengaging anyone of the three detents.

### Problems to be Solved by the Invention

Prior art U.S. Pat. No. 5,122,820 teaches the use of label indicia and corresponding windows to provide respective film exposure-status indications. As film cassettes are made more compact, the available space for separate label indicia and corresponding windows becomes scarcer. Thus, it is desirable to consolidate them.

### SUMMARY OF THE INVENTION

According to the invention, a film cassette comprising a cassette shell adapted to house a filmstrip, and film exposure-status indicating means for providing respective indications that a filmstrip housed in the cassette shell is unexposed or exposed, is characterized in that:
the film exposure-status indicating means includes a plurality of icon cut-outs in the shell uniquely shaped to be different from each other for one of the cut-outs to denote the filmstrip is unexposed and another of the cut-outs to denote the filmstrip is exposed, and an indicator flag rotatably supported to be successively visible through the cut-outs to highlight the cut-outs to provide respective indications that the filmstrip is unexposed or exposed.

### Advantageous Effects of the Invention

By providing icon cut-outs in place of separate label indicia and corresponding windows to serve as respective indications that a filmstrip housed in the cassette shell is unexposed or exposed, the film cassette can be made more compact.

### BRIEF DESCRIPTION OF THE DRAWINGS

FIG. 1 is an exploded perspective view of a film cassette in accordance with a preferred embodiment of the invention;
FIG. 2 is an assembled perspective view of the film cassette;
FIG. 3 is an assembled perspective view of the film cassette depicted with part of the cassette shell cut away to show a spool lock;
FIG. 4 is an end view of the film cassette depicting several film exposure-status icons; and
FIG. 5 is a perspective view of a film spool which is rotatably supported inside the cassette shell.

### DETAILED DESCRIPTION OF THE PREFERRED EMBODIMENT

The invention is disclosed as being embodied preferably in a film cassette. Because the features of a film cassette are generally known as shown in U.S. Pat. No. 5,122,820, the description which follows is directed in particular to elements forming part of or cooperating directly with the disclosed embodiment. It is to be understood, however, that other elements not specifically shown or described may take various forms known to persons of ordinary skill in the art.

### The Film Cassette---General

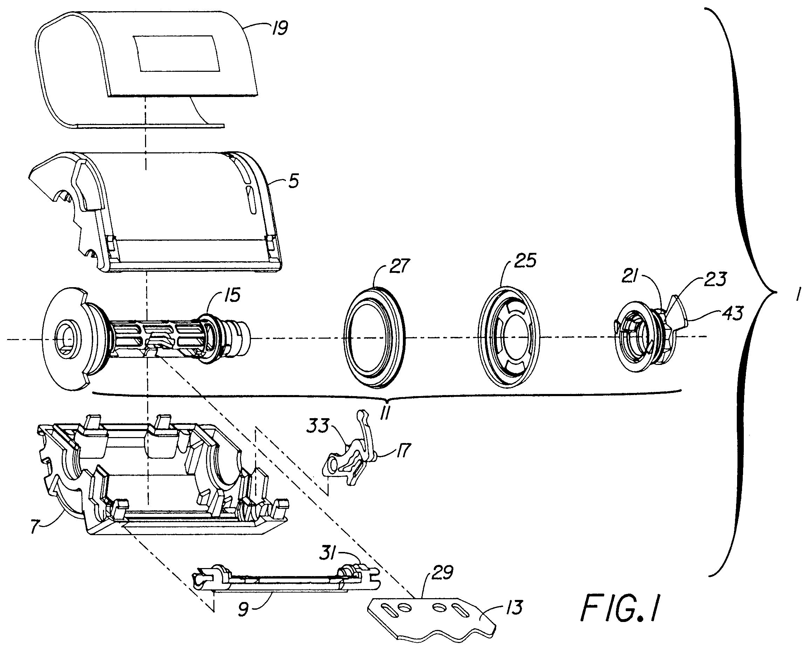

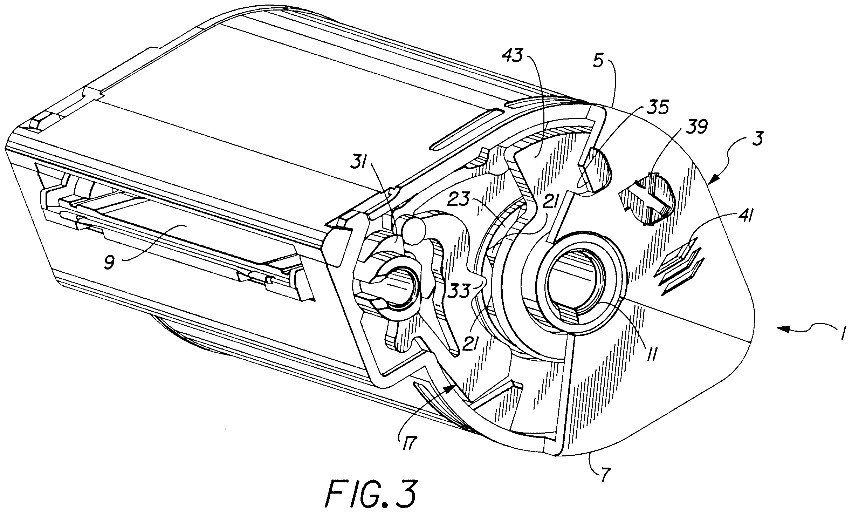

Referring now to the drawings, FIG. 1 is an exploded perspective view of a film cassette 1 in accordance with a preferred embodiment of the invention, and FIG. 3 is an assembled perspective view of the film cassette depicted partly cut away to show certain details of its interior. Generally, the film cassette 1 comprises a cassette shell 3 made up of two mating shell halves 5 and 7, a light-shielding door 9 closed to prevent ambient light from entering the cassette interior through a film egress/ingress slot located between the two shell halves and opened to permit film movement into and out of the cassette interior via the film egress/ingress slot, a film spool 11 supported for rotation inside the cassette shell in opposite film unwinding and film winding directions to unwind a filmstrip 13 off the spool core 15 and to wind the filmstrip onto the spool core, a spool lock 17 for engaging the spool core to prevent rotation of the film spool and out of engagement to release the film spool, and a cassette covering label 19.

The spool core 15 as shown in FIGS. 1, 3, and 5 has a toothed periphery consisting of successive symmetrical teeth 21 separated by interdental spaces 23, and it supports a pair of coaxial flanged disks 25 and 27 between which the filmstrip 13 is stored in roll form. A trailing or inner end 29 of the filmstrip 13 is attached to the spool core 15.

The light-shielding door 9 as shown in FIGS. 1 and 3 includes integral cam means 31 for pivoting the spool lock 17 to a locking position as the door is closed. When the spool lock 17 is in its locking position, not shown, an integral detent 33 of the spool lock is located in anyone of the interdental spaces 23 between two adjacent teeth 21 of the spool core 17 to secure the film spool 11 in anyone of a number of rotational orientations equal to the number of interdental spaces. If the light-shielding door 9 is opened as shown in FIG. 3, its cam means 31 is retracted from the spool lock 17. As a result, forcible rotation of the film spool 11 in the film winding or film unwinding direction will cause one of the two adjacent teeth 21 between which the detent 33 is located to eject the detent from the interdental space 23 separating those two teeth. Thus, the spool lock 17 will be pivoted out of its locking position.

### The Film Exposure-Status Indicating Means Of The Film Cassette

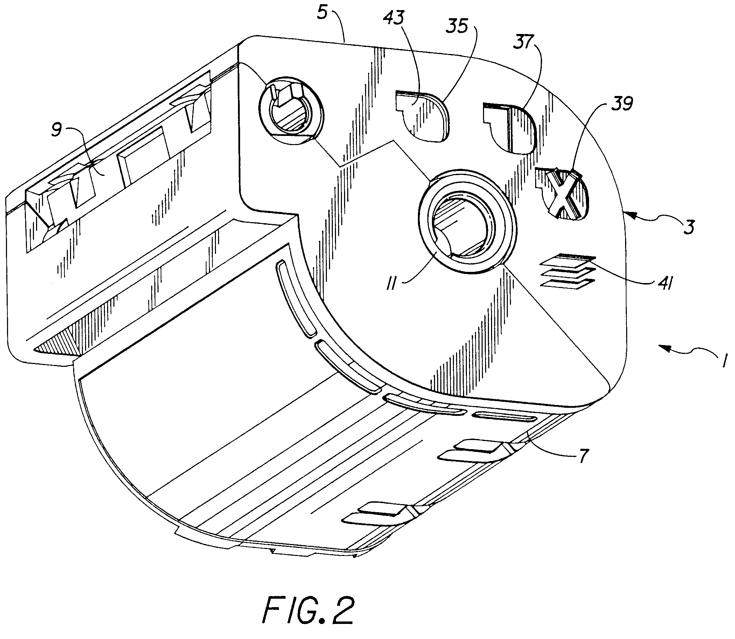

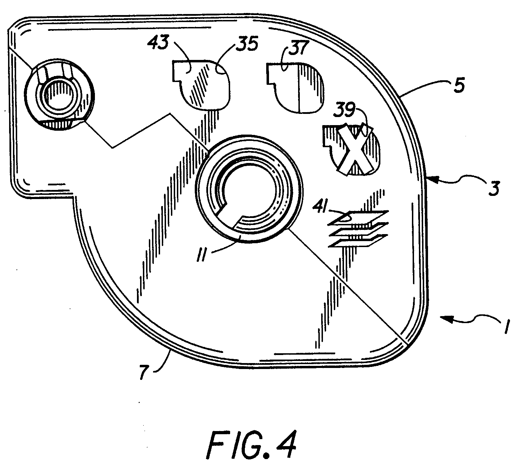

The shell half 5 at one of its ends has four different icons in the form of respective cut-outs 35, 37, 39, and 41 shown in FIGS. 2 and 4. The icon cut-out 35 is uniquely shaped to effect an indication that the filmstrip 13 is fresh or unexposed. The icon cut-out 37 is uniquely shaped to effect an indication that the filmstrip 13 is partly exposed (and partly unexposed). The icon cut-out 39 is uniquely shaped to effect an indication that the filmstrip 13 is fully exposed. The icon cut-out 41 is uniquely shaped to effect an indication that the filmstrip 13 has been processed in a film processing machine to develop the latent images on the exposed film.

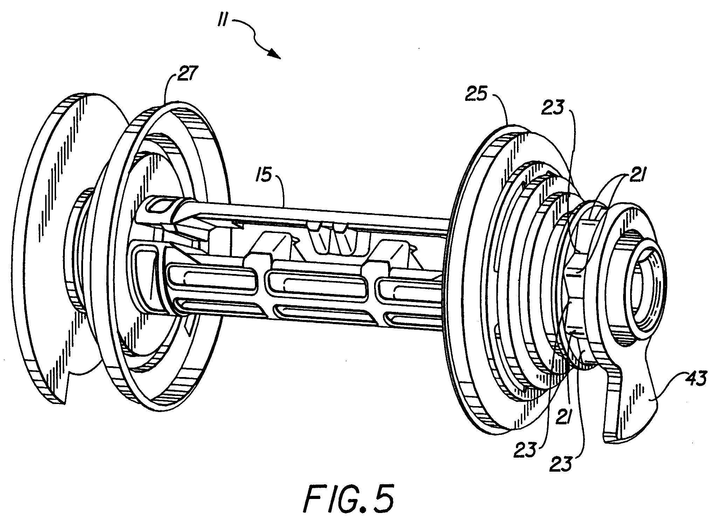

An indicator flag 43, which preferably is a different color than the cassette shell 3, is coaxially fixed to the spool core 15 as shown in FIGS. 1 and 5, to be rotated with the film spool 11 in the film unwinding and film winding directions. Initially, the flag 43 is secured with the film spool 11 in a rotational orientation that locates the flag immediately beneath the cut-out 35 as shown in FIGS. 2 and 4, to be visible to provide an indication that the filmstrip 13 is fresh or unexposed. Conversely, when the flag 43 is secured with the film spool 11 in a rotational orientation that locates the flag immediately beneath the cut-out 37, it is visible to provide an indication that the filmstrip 13 is partly exposed (and partly unexposed). When the flag 43 is secured with the film spool 11 in a rotational orientation that locates the flag immediately beneath the cut-out 39, it is visible to provide an indication that the filmstrip 13 is fully exposed. When the flag 43 is secured with the film spool 11 in a rotational orientation that locates the flag immediately beneath the cut-out 41, it is visible to provide an indication that the filmstrip 13 has been processed to develop latent images on the filmstrip.

The invention has been described with reference to a preferred embodiment. However, it will be appreciated that variations and modifications can be effected by persons of ordinary skill in the art without departing from the scope of the invention.

### Parts List For FIGS. 1-5

- 1.: film cassette
- 3.: cassette shell
- 5 & 7.: shell halves
- 9.: light-shielding door
- 11.: film spool
- 13.: filmstrip
- 15.: spool core
- 17.: spool lock
- 19.: covering label
- 21.: spool teeth
- 23.: interdental spaces
- 25 & 27.: spool disks
- 29.: trailing film end
- 31.: camming means of door
- 33.: detent of spool lock
- 35, 37, 39, & 41.: four icon cut-outs
- 43.: indicator flag

## Claims

1. A film cassette comprising a cassette shell adapted to house a filmstrip, and film exposure-status indicating means for providing respective indications that a filmstrip housed in said cassette shell is unexposed or exposed, is characterized in that:
said film exposure-status indicating means includes a plurality of icon cut-outs in said shell uniquely shaped to be different from each other for one of said cut-outs to denote the filmstrip is unexposed and another of the cut-outs to denote the filmstrip is exposed, and an indicator flag rotatably supported to be successively visible through said cut-outs to highlight the cut-outs to provide respective indications that the filmstrip is unexposed or exposed.

2. A film cassette as recited in claim 1, wherein said film exposure-status indicating means includes another icon cut-out in said shell which is uniquely shaped to denote the filmstrip is processed to develop latent images on the filmstrip.
